# EUROPEAN PATENT APPLICATION

(11) **EP 1 431 692 A2**
(43) Date of publication of application: **23.06.2004**
(21) Application number: 03445144.3
(22) Date of filing: 15.12.2003
(51) Int. Cl.: F26B 3/06, F26B 9/10, F26B 21/00

(54) **Method for drying pasture plants.**

(30) Priority: 16.12.2002 SE 0203730
(71) Applicant: Ekokraft Gotland AB, 620 12 Hemse (SE)
(72) Inventor: Bendelin, Svante, 620 12 Hemse (SE); Stumle, Anders, 621 73 Visby (SE); Ahlqvist, Hakan, 115 20 Stockholm (SE); Hagman, Gunn, 620 13 Stanga (SE); Batelsson, Allan, 620 10 Burgsvik (SE); Carlsson, Arvid, 620 10 Burgsvik (SE)
(74) Representative: Karlsson, Leif Karl Gunnar

(57) **Abstract**

The present invention relates to a method for drying pasture plants. The method comprises a first drying (1) of the pasture plants, drying being effected directly on the field of the pasture plants. After to the first drying, the pasture plants is ensiled (5). Furthermore, the method comprises a second drying (6) of the ensiled pasture plants, drying being effected by the fact that heated air flows through the ensiled pasture plants. The heated air is heated by a heat-carrying medium via a wall separating the air and the medium.

## Description

### Technical Field of the Invention

The present invention relates to a method for drying pasture plants. The method comprises a first drying of the pasture plants, drying being effected directly on the field of the pasture plants. After the first drying, the pasture plants is ensiled. Furthermore, the method comprises a second drying of the ensiled pasture plants, drying being effected by the fact that heated air flows through the ensiled pasture plants.

### Field of the Invention

In traditional drying of pasture plants, the newly harvested pasture plants is driven directly to a drying plant for drying. In the drying plant, heated air is blown through the pasture plants raw material for drying the same in this way. The fresh pasture plants has a low DM (dry matter) content, around 20 %. New-mown pasture plants also has large natural variations in DM content. At drying of pasture plants of large variations in DM content, it is difficult to obtain an even flow of pasture plants in the drying plant. The low DM content also requires very high temperatures in order to obtain an efficient drying. The drying temperature in plants for drying fresh pasture plants is 800-900°. In order to obtain a sufficiently high drying temperature, environmental-friendly fuels cannot be used, but it is required that fuels having high energy content, such as oil or gas, are used. The air is heated directly from the source of heat. By virtue of this, exhaust gas and soot-flakes from the combustion process will be blown into the pasture plants. Furthermore, at these high temperatures, there is a large risk of the proper raw material that is to be dried catching fire during the drying process. The problem with danger of fire is a large problem in this type of drying plants.

### Summary of the Invention

The present invention intends to provide a method for drying pasture plants that solves the above mentioned problems. The method comprises a first drying of the pasture plants directly on the field of the pasture plants. With this first drying, the DM content of the pasture plants is increased from approx. 20 % to 45-55 %. Then, the pasture plants is ensiled. The ensiled pasture plants raw material may be stored during a long time, and therefore final drying may take place any time during the year. In the ensiling, the pasture plants is packed hard and this, together with the proper ensiling process, results in ensiled pasture plants having substantially lower variations of DM content than fresh pasture plants. Furthermore, the method comprises a second drying of the ensiled pasture plants. Drying is then effected by the fact that heated air flows through the ensiled pasture plants. By using ensiled pasture plants, which has an even DM content, in this second drying an even flow of the pasture plants through the drying plant may be obtained. The pre-dried and then ensiled pasture plants holds a DM content of 45-55 % which has the advantage of a drying temperature of approx. 180 °C being sufficient in order to obtain an efficient drying. At these substantially lower temperatures, environmental-friendly fuels, such as wood chips, may be used. The heated air is heated by a heat-carrying medium via a separating wall between the air and the medium. Since the air that should flow through the pasture plants that should be dried is kept entirely spaced-apart from the proper source of heat, it is avoided that exhaust gas from the source of heat comes into contact with the pasture plants. After the second drying, the pasture plants raw material has a DM content of approx. 90 %.

### Brief Description of the Drawings

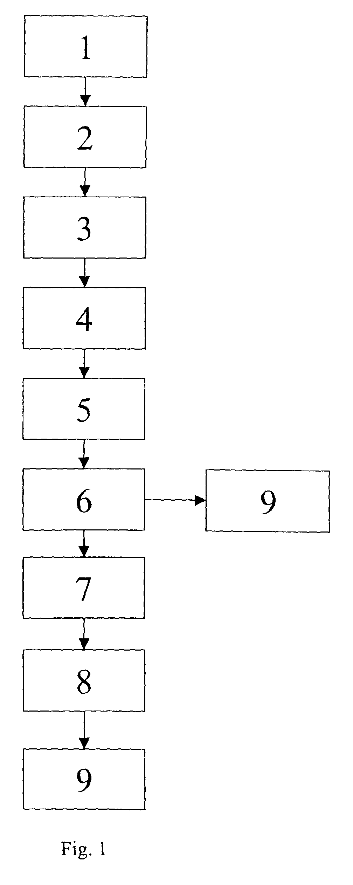

Fig. 1 shows a flow chart describing different steps in a method for drying pasture plants according to a preferred embodiment of the present invention. The steps that are comprised are
   1 choice of seed mix,
   2 harvesting,
   3 a first drying of the pasture plants directly on the field,
   4 cutting, addition of culture of bacteria and ensiling,
   5 intermediate storing of the ensiled pasture plants in silos,
   6 a second drying of the ensiled pasture plants,
   7 admixturing of root vegetable mash,
   8 a third drying,
   9 pelleting.

### Detailed Description of Preferred Embodiments

A preferred embodiment of the present invention will now be disclosed in detail by means of the accompanying figure.

Figure 1 shows a flow chart for a process that comprises the method for drying pasture plants according to the present invention. In a first step 1 it is selected which type of pasture plantsseed mix that is most suitable depending on the desired final-result. The energy and protein content of the final product is controlled by selection of pasture plants plants.

In a second step 2, the finished pasture plants is harvested. In a third step, the pasture plants goes through a first drying 3 directly on the field, a DM content of 45-55 % being obtained. The pre-dried pasture plants is cut to a short cut length, culture of bacteria may be added and the pasture plants raw material goes through an ensiling process 4 and is then stored in silos 5. Next, the ensiled pasture plants raw material goes through a second drying 6 by the fact that heated air is blown in by a fan. The air is heated indirectly to approx. 180° from a source of heat that preferably comprises combustion of an environmental-friendly fuel such as wood chips. In a preferred embodiment, the air is heated via a heat exchanger. After the second drying, the pasture plants raw material has a DM content of approx. 90 %.

After the second drying, different things in order to increase the energy and/or protein content may, if desired, be added to the pasture plants raw material, which then holds approx. 90 % DM content. One way to increase the energy level is, in a preferred embodiment, to mix the pasture plants raw material with root vegetable mash 7. The root vegetable mash has approx. 15-20 % DM content, a homogeneous root vegetable-pasture plants mixture having approx. 45 % DM content being obtained on mixture with the pasture plants raw material. In drying of pure root vegetable mash, which thus holds a DM content of 15-20 %, high temperatures are required. By mixing, as described above, root vegetable mash with the pasture plants raw material and then dry root vegetable-pasture plants mixture another time 8, by the fact that heated air, which is spaced-apart from the source of heat, is blown through the mixture, drying of root vegetable mass may be achieved at a substantially lower temperature, which in turn enables drying by means of environmental-friendly fuels without risk of exhaust gas being mixed in the final product by the above-described drying process.

In a last step, the ensiled and dried pasture plants or root vegetable-pasture plants mixture is pelleted 9. The pelleting process does not require any additives, but if the energy and protein content in the final product is desired to be increased, cold-pressed colza oil may be mixed in.

This above-described process discloses a method being environmental-friendly in all steps, which leads up to a 100 % KRAV-approved final product.

The invention is not limited to the embodiments mentioned above as examples, but may be made as modifications within the scope of the general idea according to the invention disclosed in the subsequent claims.

## Claims

1. Method for drying cut pasture plants **characterized by**:
- a first drying (1) of said pasture plants, drying being effected directly on the field of the pasture plants,
- ensiling (5) of said pasture plants after said first drying,
- a second drying (6) of said ensiled pasture plants, drying being effected by the fact that heated air flows through the ensiled pasture plants,
said heated air being heated by a heat-carrying medium via a separation wall between the air and the medium.

2. Method according to claim 1, **characterized in that** said separation wall is comprised in a heat exchanger.

3. Method according to any one of the preceding claims, **characterized in that** the pasture plants raw material in said first drying is dried to a DM content of 45-55 %.

4. Method according to any one of the preceding claims, **characterized in that** said second drying is effected with air that is cooler than 200 °C.

5. Method according to any one of the preceding claims, **characterized in that** the pasture plants raw material in said second drying is dried to a DM content of 85-95 %.

6. Method according to any one of the preceding claims, the dried pasture plants raw material after said second drying being mixed with root vegetable mash (7), **characterized in that** a third drying (8) is comprised, drying being effected by the fact that heated air flows through the root vegetable-pasture plants mixture, said air being heated by a heat-carrying medium via a wall separating the air and the medium.

7. Method according to claim 6, **characterized in that** the root vegetable-pasture plants mixture is dried to a DM content of 85-95 %.
